# EUROPÄISCHE PATENTSCHRIFT

(11) **EP 1 258 348 B1**
(45) Veröffentlichungstag und Bekanntmachung des Hinweises auf die Patenterteilung: **13.01.2010**
(21) Anmeldenummer: 02009371.2
(22) Anmeldetag: 06.05.2002
(51) Int. Cl.: B32B 27/32

(54) **Polyolefinfolie mit peelfähiger Deckschicht**
Polyolefin film with peelable cover layer
Feuille en polyoléfine avec couche supérieure pelable

(30) Priorität: 18.05.2001 DE 10124209
(43) Veröffentlichungstag der Anmeldung: 20.11.2002
(73) Patentinhaber: Wipak Walsrode GmbH & Co. KG, 29656 Walsrode (DE)
(72) Erfinder: Sperlich, Bernd, Dr., 29664 Walsrode (DE); Wunderlich, Hans, Dr., 29699 Bomlitz (DE); Wagner, Helmut, 29699 Bomlitz (DE); Schwarz, Willi, 29699 Bomlitz (DE)
(74) Vertreter: Lins, Martina

(56) Entgegenhaltungen:
- EP-A- 0 753 403
- WO-A-01/15897
- WO-A-96/04178
- US-A- 5 437 911
- PATENT ABSTRACTS OF JAPAN vol. 1998, no. 02, 30. Januar 1998 (1998-01-30) & JP 09 262948 A (MITSUI PETROCHEM IND LTD), 7. Oktober 1997 (1997-10-07)

## Beschreibung

Die vorliegende Erfindung betrifft gereckte Polyolefin-Mehrschichtfolien mit mindestens einer peelfähigen Deckschicht.

Siegelnähte bei gereckten Polyolefinfolien, insbesondere biaxial orientierten Polypropylenfolien, haben häufig eine höhere mechanische Festigkeit als die Folie selbst, so dass beim Öffnen einer versiegelten Packung nicht nur in der Siegelnaht aufgerissen wird, sondern die gesamte Folie unkontrolliert weiterreißt. Unter peelfähigen Folien werden Folien verstanden, die man nach dem Versiegeln wieder mechanisch trennen kann ohne die Folie selbst zu beschädigen oder zu zerstören. Peelfähige Siegelschichten müssen gute Siegeleigenschaften haben und zugleich ein kontrolliertes Öffnen der Packung ermöglichen. Ein wichtiges Merkmal einer solchen peelfähigen Siegelschicht ist, dass dieses Verhalten über einen möglichst großen Temperaturbereich der Siegelwerkzeuge auftritt, und die Siegelnahtfestigkeit über diesen Temperaturbereich möglichst konstant ist. Dabei darf die Siegelnahtfestigkeit bei gereckten Polyolefinfolien nicht zu hoch sein, weil diese Folien eine sehr geringe Weiterreißfestigkeit haben und schon bei geringsten Beschädigungen unkontrolliert abreißen. Ein weiteres wichtiges Merkmal ist eine gute Transparenz der Folie, was für viele Anwendungen erwünscht wird, damit das Produkt ganz oder teilweise sichtbar ist und evt. Aufschriften gut lesbar sind. Ein Beispiel hierfür ist die Verpackung von Compact discs.

Ein weiteres wichtiges Merkmal ist eine gute Warmbelastbarkeit der Siegelnaht. Dies ist notwendig, weil insbesondere bei der Herstellung von Beuteln auf vertikalen Schlauchbeutelmaschinen das zu verpackende Produkt direkt nach Versiegelung der Bodennaht auf die noch heiße Bodennaht fällt. Die dadurch entstehende mechanische Belastung der noch heißen Bodennaht des Beutels darf dabei nicht zu einer Beschädigung derselben oder gar zum Aufreißen des Beutels führen.

Die US-A-4,666,778 beschreibt transparente, peelfähige Folien mit hoher Siegelnahtfestigkeit. Die peelfähigen Schichten haben eine Dicke von 40 µm und mehr. Solch dicke Siegelschichten sind für orientierte Polyolefinfolien von Nachteil, da diese damit für viele Anwendungen, wo es auf dünne Folien ankommt, nicht mehr geeignet sind.

EP-A-0 692 373 und EP-A 0 781 652 beschreiben opake Folien mit mindestens einer peelfähigen Deckschicht. Für viele Anwendungen ist jedoch eine transparente Folie erwünscht. Die opake Folie der EP-A-0781652 umfasst eine Kernschicht mit Pigmenten und Vakuolen, eine weiche Zwischenschicht und eine Deckschicht aus einer Mischung inkompatibler Polymere.

Die US-A-5,500,265 beschreibt eine peelfähige Folie. Die Beschichtung besteht aus einem Acryl-Polymeren oder einem Polyvinylidenchlorid-Polymeren. An dieser Folie ist nachteilig, dass der Verschnitt nicht wieder als Recyclat zurückgeführt werden kann. Sie ist teuer in der Herstellung, da die Beschichtung in einem separaten Arbeitsschritt nach der Herstellung der Folie erfolgen muss und meistens einen zusätzlichen Haftvermittler erfordert.

Die US-A-5,437,911 beschreibt eine gereckte Folie, dessen peelbarer, hitzeverschweißbarer Überzug ein Olefin Copolymer und ein Polyester Copolymer beinhaltet.

Die WO-A1-0030850 beschreibt transparente, ungereckte peelfähige Folien aus mindestens 2 Schichten mit einer Basisschicht aus einem Propylenpolymer oder Propylen-Copolymer, mit überwiegendem Propylenanteil, wobei die Deckschicht eine niedrigeren Schmelzpunkt als die Basisschicht aufweist.

Es stellt sich daher die Aufgabe, eine gereckte Polyolefin-Mehrschichtfolie mit hoher Transparenz bereitzustellen, welche nach dem Versiegeln bei unterschiedlichen Temperaturen peelbar ist und damit einem großen Peelbereich aufweist. Außerdem muss die Folie über diesen Peelbereich möglichst konstante Siegelnahtfestigkeiten und eine hohe Warmbelastbarkeit der Siegelnähte aufweisen.

Erfindungsgemäß gelang dies durch eine biaxial orientierte, transparente Polyolefin-Mehrschichtfolie aus mindestens drei Schichten, **dadurch gekennzeichnet, dass** sie den folgenden Schichtaufbau umfasst:
a) eine transparente Polyolefin-Basisschicht, die im Wesentlichen aus Polypropylen besteht,
b) mindestens eine peelfähige Deckschicht aus einem oder mehreren ethylenischen Polymeren oder Copolymeren, die einen Ethylengehalt von 80 bis 100 Gew.-% aufweisen, und
c) mindestens eine Zwischenschicht im Wesentlichen aus einem
   Copolymer von
   Propylen und Ethylen oder
   Propylen und Butylen oder
   Propylen und einem anderen -Olefin mit 5 bis 10 Kohlenstoffatomen oder einem Terpolymer von
   Propylen und Ethylen und Butylen oder
   Propylen und Ethylen und einem anderen -Olefin mit 5 bis 10 Kohlenstoffatomen
   oder
   einer Mischung aus zwei oder mehreren der genannten Co- und Terpolymeren.

Die erfindungsgemäße Folie ist mindestens dreischichtig und umfasst als wesentliche Schichten immer die transparente Basisschicht aus Polypropylen mindestens eine Zwischenschicht aus Propylen Co- oder Terpolymer und mindestens eine peelfähige Deckschicht vorzugsweise beidseitig Deckschichten, welche gleich oder verschieden sein können. Bei einer einseitigen peelbaren Deckschicht handelt es sich bei der gegenüberliegenden Deckschicht bevorzugt um eine siegelbare Deckschicht.

Für den Fall, dass die erfindungsgemäße Folie zwei peelbare Deckschichten aufweist, hat die Folie auch zwei Zwischenschichten, die sich jeweils zwischen den Deckschichten und der Basisschicht befinden. Für den Fall, dass die erfindungsgemäße Folie nur eine peelbare Deckschicht aufweist, hat die Folie auch nur eine Zwischenschicht zwischen der peelbaren Deckschicht und der Basisschicht.

Die Gesamtdicke der Folie kann innerhalb weiter Grenzen variieren. Die bevorzugte Ausführungsform hat eine Gesamtdicke von 10 bis 100 µm, wobei 15 bis 40 µm bevorzugt sind. Die Dicke der peelfähigen Deckschicht(en) liegt bevorzugt im Bereich von 0,5 bis 8 µm. Die Dicke der Zwischenschicht(en) aus Propylen Co- oder Terpolymer liegt bevorzugt im Bereich von 0,5 bis 5 µm. Die Proplyen Co- oder Terpolymere weisen im Allgemeinen einen Schmelzflussindex von 1,5 bis 30 g/10 min, vorzugsweise 3 bis 15 g/10 min, auf (gemäß DIN 53 753). Der Schmelzpunkt liegt im Bereich von 120 bis 140 °C.

Die Basisschicht besteht im Wesentlichen oder vollständig aus einem Polypropylen. Vorzugsweise wird ein isotaktisches Polypropylen mit einer Dichte von 0,90 bis 0,91 g/cm³ und einem Schmelzflussindex von 1 bis 4 g/10min bei 230 °C/21,6 N (nach DIN 53 735) verwendet. Des Weiteren kann die Folie Gleitmittel und Antistatikadditve enthalten.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere geeignetes aliphatisches Säureamid ist Erucasäureamid.

Bevorzugte Antistatikadditive sind Alkali-alkansulfonate, polyethermodifizierte, d.h. ethoxylierte und/oder propoxylierte Polydiorganosiloxane (Poyldialkylsiloxane, Polyalkylphenylsiloxane und dergleichen) und/oder die im Wesentlichen geradkettigen und gesättigten aliphatischen, tertiären Amine mit einem alipatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des Weiteren ist Glycerinmonostearat geeignet und wird in einer Menge von 0,03 bis 0,5 Gew.-% als Antistatikum eingesetzt.

In einer bevorzugten Ausführungsform besteht die peelbare Schicht im Wesentlichen aus LLDPE, LDPE, MDPE, Ethylen-Vinylacetat-Copolymer, Ethylen-Methylacrylat-Copolymer, HDPE oder Mischungen daraus. Die genannten ethylenischen Polymere haben erfindungsgemäß einen Ethylengehalt von 80 bis 100 Gew.-%, vorzugsweise 95 bis 100 Gew.-%. Insbesondere sind LDPE und LLDPE geeignet.

Die erfindungsgemäßen Folien können nach den üblichen Verfahren wie Laminierung, Beschichtung oder Schmelzcoextrusion hergestellt werden. Nach der Extrusion und der Verfestigung des Dickfilms auf der Gießwalze wird der Film in Laufrichtung (längs) mit einem Verstreckungsquotienten von 4/1 bis 7/1 bei einer Temperatur von 120 °C bis 150 °C gereckt. Das Reckverhältnis in Querrichtung liegt vorzugsweise zwischen 8/1 und 12/1 und das Querrecken des Filmes wird bei einer Temperatur zwischen 130 °C und 170°C vorgenommen. Um die Affinität der weitgehend unpolaren Folienoberfläche zu den Druckfarben zu gewährleisten, ist es zweckmäßig, die Folie einer Corona-(Sprüh) Vorbehandlung in an sich bekannter Weise zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma- und Fluorvorbehandlung.

In einer bevorzugten Ausführungsform werden die der Basisschicht und der Zwischenschicht entsprechenden Schmelzen durch eine Flachdüse coextrudiert, die so erhaltene Folie zur Verfestigung auf einer oder mehreren Walzen abgezogen, die Folie anschließend in Maschinenlaufrichtung gestreckt, die peelfähige(n) Deckschicht(en) auf die Zwischenschicht(en) unter Einwirkung von Wärme und Druck aufgebracht und die so erhaltene Mehrschichtfolie senkrecht zur Maschinenlaufrichtung gestreckt. Dies hat zur Folge, dass die Basisschicht und die Zwischenschicht(en) biaxial gereckt sind, die peelfähige(n) Deckschicht(en) aber nur quer zur Maschinenlaufrichtung gereckt sind.

Die erfindungsgemäße Folie zeichnet sich durch gute Peeleigenschaften, eine gute Warmbelastbarkeit der Siegelnähte und eine hohe Transparenz aus. Die Siegelnahtfestigkeit liegt über einen großen Temperaturbereich bei einem konstanten Niveau, wodurch ein breites Verarbeitungsfenster an der Verpackungsmaschine erreicht wird.

### Prüfmethoden:

### Bestimmung der Siegelnahtfestigkeit:

Zur Bestimmung wurden zwei 15 mm breite Streifen übereinander gelegt und bei der jeweiligen Temperatur mit einer Siegelzeit von 0,5 s und einem Siegeldruck von 50 N/cm² versiegelt. Anschließend wird die zum Trennen der Siegelnaht notwendige Kraft gemessen.

### Bestimmung der Warmbelastbarkeit der Siegelnähte:

Die Bestimmung der Warmbelastbarkeit der Siegelnähte erfolgte an einer vertikalen Schlauchbeutelmaschine der Firma Bosch (Typ SVZ 1650 AM). Dazu werden 500 g getrocknete Erbsen mit einer Taktzahl von 50 / min. und einer Siegeltemperatur von 140 °C (Querprofil der Siegelnaht) verpackt. Die Fallhöhe der Erbsen beträgt 1 m. Der Test ist positiv, wenn die Siegelnähte durch den Aufprall der Erbsen nicht beschädigt werden.

### Beispiele

Die beiden Außenschichten (Deckschichten) mit den in Tabelle 1 angegebenen Bestandteilen werden auf eine monaxial gereckte, dreischichtige Basisfolie aufgetragen und anschließend quer zur Maschinenrichtung gereckt, so dass eine fünfschichtige Verbundfolie mit einer Längsreckung im Verhältnis 5:1 und einer Querreckung im Verhältnis 10:1 erhalten wird, wobei die beiden Außenschichten (Deckschichten) nur quer zur Maschinenrichtung gereckt sind. Die coextrudierte dreischichtige Basisfolie besteht aus einer Basisschicht aus Polypropylen in der Dichte 0,91 g/cm³ und dem Schmelzindex von 3,0 g/10 min bei 230 °C/21,6 N sowie zwei Außenschichten (Zwischenschichten) aus Propylen-Ethylen-Copolymeren mit einem Ethylengehalt von 4,5 %, einem MFI von 5 g/10 min (230 °C/2,16 kp/cm²) und einer Dichte von 0,90 g/cm³. Die Außenschichten der dreischichtigen Basisfolie bilden in der fünfschichtigen Verbundfolie die Zwischenschichten.

Die fünfschichtige Verbundfolie hat nach dem Reckprozess eine Dicke von 25 µm. Die beiden Zwischenschichten (Außenschichten der Basisfolie) haben jeweils eine Dicke von 1 µm. Die beiden Außenschichten der fünfschichtigen Verbundfolie haben jeweils eine Dicke von 3 µm.

**Tabelle 1**

| Beispiel | Bestandteile der Außenschicht (Deckschicht) ¹⁾ |
|---|---|
| B1 | 99% Ethylen-Vinylacetat-Copolymer ²⁾ |
| B2 | 99% LDPE ³⁾ |
| V4 (Vergleichsbeispiel) | 99% Propylen-Ethylen-Copolymer ⁴⁾ |
| V5 (Vergleichsbeispiel)⁵⁾ | 99% LDPE ³⁾ |

| | |
|---|---|
| 1) Neben den in der Tabelle aufgeführten Bestandteilen enthalten die Außenschichten jeweils 0,3 Gew.-% N,N-Bis-(2-hydroxyethyl)-(C₁₂-C₁₆)-alkylamin, 0,6 Gew.-%eines Polydimethylsiloxans der Dichte von 0,985 g/cm3 bei 20 °C und einer Viskosität von 10⁶ m Pa s und 0,1 Gew.-% Siliciumdioid mit einer mittleren Teilchengröße von 4 µm 2) 5% Vinylacetat Monomergehalt, MFI=7,5 g/10 min (ASTM D 1238), Dichte: 0,925 g/cm³ 3) MFI=7,5 g/10 min (ASTM D 1238); Dichte: 0,9155 g/cm³) 4) 4,5 % Ethylen Monomergehalt, MFI=5 g/10 min (230 °C/2,16 kp/cm²), Dichte 0,90 g/cm³ 5) In Beispiel 5 (Vergleichsbeispiel) besteht die Basisfolie nur aus einer Schicht (Schichtdicke nach Reckung: 19 µm) Polypropylen der Dichte 0,91 g/cm³ und dem Schmelzindex von 3,0 g/10min bei 230 °C/21, 6 N. | |

**Tabelle 2**

| | Siegelnahtfestigkeit in N/15 mm bei folgender Siegeltemperatur | | | | | |
|---|---|---|---|---|---|---|
| Beispiel | 90 °C | 100 °C | 110 °C | 120 °C | 130 °C | 140 °C |
| B 1 | 0,1 (peelfä hig) | 0,6 (peelfä hig) | 0,6 (peelfä hig) | 0,7 (peelfähig) | 0,7 (peelfähig) | 0,7 (peelfähig) |
| B2 | | 0,3 (peelfähig) | 0,5 (peelfähig) | 0,5 (peelfähig) | 0,8 (peelfähig) | 0,7 (peelfähig) |
| V4 | | | | 1,0 (Folie reißt) | 1,6 (Folie reißt) | 2,1 (Folie reißt) |
| V5 | | 0,3 (peelfähig) | 1,0 (Folie reißt) | 1,3 (Folie reißt) | 1,2 (Folie reißt) | 1,5 (Folie reißt) |

**Tabelle 3**

| Warmbelastbarkeit der Siegelnähte (Belastung durch 500 g Erbsen) | |
|---|---|
| Beispiel 1 | Geringe Beschädigung der Siegelnaht (Beutelboden) |
| Beispiel 2 | Geringe Beschädigung der Siegelnaht (Beutelboden) |
| Beispiel 4 (Vergleichsbei spiel) | Keine Beschädigung der Siegelnaht (Beutelboden) |
| Beispiel 5 (Vergleichsbei spiel) | Starke Beschädigung der Siegelnaht (Beutelboden); das Füllgut durchschlägt die Siegelnaht |

Aus Tabelle 2 wird ersichtlich, dass in den Beispielen 1 und 2 die Siegelnahtfestigkeit über einen Bereich von 40 °C annähernd konstant ist und in keinem Fall die Folie während des Auseinanderziehens der Siegelnaht beschädigt wird. Die Beispiele 4 und 5 zeigen, dass diese Folien beim Auseinanderziehen der Siegelnaht zerstört werden.

Tabelle 3 zeigt die Wärmeblastbarkeit der Siegelnähte. Bei den Beispielen 1 und 2 der erfindungsgemäßen Folie tritt kein oder nur eine geringe Beschädigung der Bodennaht des Beutels auf. Bei der Folie in Beispiel 4 (Vergleichsbeispiel) tritt zwar auch keine Beschädigung auf, diese Folie ist aber bei keiner Siegeltemperatur peelfähig (siehe Tabelle 2). Die Folie in Vergleichsbeispiel zeigt eine schlechte Warmbelastbarkeit der Siegelnaht.

## Patentansprüche

1. Peelfähige, biaxial orientierte, transparente Polyolefin-Mehrschichtfolie aus mindestens drei Schichten, **dadurch gekennzeichnet, dass** sie den folgenden Schichtaufbau umfasst:
a) eine transparente Polyolefin-Basisschicht, die im Wesentlichen aus Polyproplyen besteht,
b) mindestens eine peelfähige Deckschicht aus einem oder mehreren ethylenischen Polymeren oder Copolymeren, die einen Ethylengehalt von 80 bis 100 Gew.-% aufweisen und
c) mindestens eine Zwischenschicht, die im Wesentlichen aus einem
Copolymer von
Propylen und Ethylen oder
Propylen und Butylen oder
Propylen und einem anderen -Olefin mit 5 bis 10 Kohlenstoffatomen
oder
aus einem Terpolymer von
Propylen und Ethylen und Butylen oder
Propylen und Ethylen und einem anderen -Olefin mt 5 bis 10 Kohlenstoffatomen oder
aus einer Mischung aus zwei oder mehreren der genannten Co- und Terpolymeren besteht.

2. Mehrschichtfolie nach Anspruch 1, **dadurch gekennzeichnet, dass** die peelfähige Deckschicht im Wesentlichen aus LLDPE, LDPE, MDPE, Ethylen-Vinylacetat-Copolymer, Ethylen-Methylacrylat-Copolymer oder HDPE besteht.

3. Verfahren zur Herstellung einer Mehrschichtfolie nach mindestens einem der vorhergehenden Ansprüche, **dadurch gekennzeichnet, dass** die der Basisschicht und der Zwischenschicht entsprechenden Schmelzen durch eine Flachdüse coextrudiert werden, die so erhaltene Folie zur Verfestigung auf einer oder mehreren Walzen abgezogen wird, die Folie anschließend in Maschinenlaufrichtung gestreckt wird, die peelfähige Deckschicht auf die Zwischenschicht unter Einwirkung von Wärme und Druck aufgebracht wird und die so erhaltene Mehrschichtfolie senkrecht zur Maschinenlaufrichtung gestreckt wird.

4. Verwendung einer Mehrschichtfolie gemäß einem der vorherigen Ansprüche als Verpackungsfolie.

## Claims

1. Peelable, biaxially oriented, transparent multilayer polyolefin foil of at least three layers, **characterized in that** it encompasses the following layer structure:
a) a transparent polyolefin base layer, which consists essentially of polypropylene,
b) at least one peelable outer layer composed of one or more ethylenic polymers or copolymers, the ethylene content of which is from 80 to 100% by weight, and
c) at least one intermediate layer which consists essentially of a copolymer of
propylene and ethylene or
propylene and butylene or
propylene and another olefin having from 5 to 10 carbon atoms
or
of a terpolymer of
propylene and ethylene and butylene or
propylene and ethylene and another olefin having from 5 to 10 carbon atoms or
of a mixture of two or more of the co- and terpolymers mentioned.

2. Multilayer foil according to Claim 1, **characterized in that** the peelable outer layer consists essentially of LLDPE, LDPE, MDPE, ethylene-vinyl acetate copolymer, ethylene-methyl acrylate copolymer or HDPE.

3. Process for the production of a multilayer foil according to at least one of the preceding claims, **characterized in that** the melts corresponding to the base layer and to the intermediate layer are coextruded through a flat-film die, the resultant foil is drawn off on one or more rolls for solidification, the foil is then stretched in machine direction, the peelable outer layer is applied to the intermediate layer with heat and pressure, and the resultant multilayer foil is stretched transversely with respect to machine direction.

4. Use of a multilayer foil according to any of the preceding claims as packaging foil.

## Revendications

1. Feuille multicouche en polyoléfine transparente, orientée biaxialement et pelable, constituée d'au moins trois couches,
**caractérisée en ce qu'**elle présente la structure de couches suivante :
a) une couche de base en polyoléfine transparente constituée essentiellement de polypropylène,
b) au moins une couche de recouvrement pelable constituée d'un ou plusieurs polymères éthyléniques ou copolymères d'éthylène dont la teneur en éthylène est de 80 à 100 % en poids et
c) au moins une couche intermédiaire essentiellement constituée d'un copolymère de
- propylène et d'éthylène ou
- de propylène et de butylène ou
- de propylène et d'une autre oléfine qui compte de 5 à 10 atomes de carbone
ou
d'un terpolymère constitué de
- propylène, d'éthylène et de butylène ou
- de propylène, d'éthylène et d'une autre oléfine comptant de 5 à 10 atomes de carbone ou
d'un mélange de deux ou plusieurs desdits copolymères et terpolymères.

2. Feuille multicouche selon la revendication 1, **caractérisée en ce que** la couche de recouvrement pelable est essentiellement constituée de LLDPE, de LDPE, de MDPE, d'un copolymère d'éthylène et d'acétate de vinyle, d'un copolymère d'éthylène et d'acrylate de méthyle ou de HDPE.

3. Procédé de fabrication d'une feuille multicouche selon au moins l'une des revendications précédentes, **caractérisé en ce que** les matières fondues qui correspondent à la couche de base et à la couche intermédiaire sont coextrudées à travers une tuyère plate, la feuille ainsi obtenue est étirée sur un ou plusieurs cylindres pour être solidifiée, la feuille étant ensuite étirée dans la direction machine, la couche de recouvrement pelable et la couche intermédiaire étant appliquées par application de chaleur et de pression et la feuille multicouche ainsi obtenue étant étirée perpendiculairement à la direction machine.

4. Utilisation d'une feuille multicouche selon l'une des revendications précédentes comme feuille d'emballage.
